# EUROPEAN PATENT APPLICATION

(11) **EP 2 735 933 A1**
(43) Date of publication of application: **28.05.2014**
(21) Application number: 13186895.2
(22) Date of filing: 01.10.2013
(51) Int. Cl.: G05F 1/56, G06F 1/24

(54) **Startup control circuit in voltage regulators and related circuits**

(30) Priority: 26.11.2012 US 201213684845
(71) Applicant: NXP B.V., 5656 AG Eindhoven (NL)
(72) Inventor: Riedel, Friedbert, Redhil, Surrey RH1 1SH (GB); Zhelyaxzkov, Aleksandar, Redhill, Surrey RH1 1SH (GB)
(74) Representative: Schouten, Marcus Maria

(57) **Abstract**

Aspects of the present disclosure are directed towards apparatus useful for controlling low drop out linear regulators during startup. A voltage regulator device can generate a regulated output voltage from an input voltage and in response to a reference voltage that has, during a startup period, a delayed ramp up relative to a corresponding ramp up of the input voltage. An error circuit generates an error signal in response to a comparison between the output voltage and the reference voltage. An output circuit includes a power transistor that is activated in response to the error signal. A startup control circuit can override, during the startup period for the voltage regulator device, the error signal and thereby counteract activation of the power transistor.

## Description

Low drop out (LDO) regulators generate and provide a regulated output direct current (DC) voltage from a DC input voltage. LDO regulators can be used for a wide variety of applications due to their capability to operate with a very small input-output differential voltage. LDO regulators can be used to generate and provide regulated power to a wide variety of devices including, but not limited to, cellular phones, tablet computers, laptop computers, digital cameras and other personal electronic devices. A particular type of LDO regulator is a linear regulator. Linear regulators control the output voltage by functioning as a variable resistance. The value of the resistance is adjusted in response to the output voltage and output load.

LDO linear regulators can be contained within a single integrated circuit (IC) chip or as part of a multi-chip IC module. Aspects of the present disclosure recognize that LDO linear regulators within an IC chip can operate with relatively complex performance characteristics using circuitry that uses comparatively simple and/or cheap components. Solutions to problems with LDO regulators, even assuming the problems are recognized, may involve undesirable tradeoffs. For instance, complex processing circuits can be expensive both in terms of physical space and manufacturing cost of the IC chip. In another instance, analog components that require tight tolerances or large values (*e*.*g*., capacitor with large capacitance or an inductor with a high quality factor) can be expensive to manufacture.

LDO linear regulators can be configured to produce a wide range of output voltages from the same input voltage. The range of potential output voltages is facilitated by the low drop out characteristics, which allow for the output voltage to be regulated to a voltage that is very close to the input voltage. The operating characteristics of an LDO linear regulator can therefore be designed to accommodate output voltages that have both small and large differences from the input voltage. Aspects of the present disclosure recognize that for certain LDO linear regulators these operating characteristics can be insufficient to accommodate conditions during startup.

Digital circuits and analog circuits use relatively low voltages, which can help reduce power consumption and heat generation. When the input voltage to an LDO is significantly higher than the output voltage to such low voltage circuits, the LDO has the potential to generate an output voltage that is significantly higher than the desired output voltage. Aspects of the present disclosure recognize that such a situation can occur due to voltage overshoot during startup. If the voltage overshoot is too great, the powered digital/analog circuit can be damaged or even destroyed.

Aspects of the present disclosure recognize that, for certain LDO linear regulators, a specially-designed startup circuit can be particularly useful.

Consistent with embodiments of the present disclosure, an LDO linear regulator controls its operating parameters during startup of the LDO. Startup of the LDO corresponds to the supply and input voltage ramp up to its steady state value. The operating parameters include the reference voltages used to control the output of the LDO.

Aspects of the present disclosure are directed towards apparatus useful for controlling low drop out linear regulators during startup. A voltage regulator device can generate a regulated output voltage from an input voltage and in response to a reference voltage that has, during a startup period, a delayed ramp up relative to a corresponding ramp up of the input voltage. An error circuit generates an error signal in response to a comparison between the output voltage and the reference voltage. An output circuit includes a power transistor that is activated in response to the error signal. A startup control circuit can override, during the startup period for the voltage regulator device, the error signal and thereby counteract activation of the power transistor.

Consistent with certain embodiments, a method is provided for operating a voltage regulator device that generates, at an output node, a regulated output voltage from an input voltage and in response to a reference voltage that has, during a startup period, a delayed ramp up relative to a corresponding ramp up of the input voltage. The method can include a step of comparing, using a comparison circuit, the output voltage and the reference voltage. Another step involves generating, using an error circuit, an error signal in response to the comparison. The error signal can be provided to a gate of a power transistor that provides power to the output node when activated. Using a startup control circuit, the error signal can be overridden and thereby activation of the power transistor is counteracted. The overriding can be halted or discontinued in response to a timing circuit that begins timing during the startup period for the voltage regulator device.

The above discussion is not intended to describe each embodiment or every implementation. The figures and following description also exemplify various embodiments.

Various example embodiments may be more completely understood in consideration of the following detailed description in connection with the accompanying drawings, in which:
FIG. 1 depicts a block diagram for an LDO linear regulator circuit, consistent with embodiments of the present disclosure;
FIG. 2 depicts a block diagram for components of a startup circuit, consistent with embodiments of the present disclosure;
FIG. 3 shows a circuit diagram for an LDO linear regulator circuit, consistent with embodiments of the present disclosure;
FIG. 4 depicts a graph of voltage per unit time with respect to the settling time of an LDO linear regulator circuit, consistent with embodiments of the present disclosure;
FIG. 5 depicts a graph of voltage per unit time with respect to the startup time of an LDO linear regulator circuit, consistent with embodiments of the present disclosure; and
FIG. 6 depicts a graph of voltage per unit time with an LDO linear regulator circuit that includes a startup circuit, consistent with embodiments of the present disclosure.

While the disclosure is amenable to various modifications and alternative forms, examples thereof have been shown by way of example in the drawings and will be described in detail. It should be understood, however, that the intention is not to limit the disclosure to the particular embodiments shown and/or described. On the contrary, the intention is to cover all modifications, equivalents, and alternatives falling within the spirit and scope of the disclosure.

Aspects of the present disclosure are believed to be applicable to a variety of different types of apparatuses, systems and methods involving startup circuits for use with LDO regulators. While not necessarily so limited, various aspects may be appreciated through a discussion of examples using this context.

Certain embodiments of the present disclosure are directed toward a startup circuit for an LDO linear regulator. The startup circuit can be configured to control operating parameters of the LDO linear regulator during startup. Startup of the LDO corresponds to when power is provided to the circuit that causes the voltage supply (and input voltage if different from the voltage supply) to ramp up to its steady state value. The operating parameters include the reference voltages used to control the output of the LDO. Although not necessarily limited there to, the control over the operating parameters can be particularly useful for preventing damage to powered circuits due to voltage overshoot during startup conditions.

Particular embodiments of the present disclosure are directed toward a startup circuit that is designed for use with and LDO linear regulator that exhibits different ratios between internal reference voltages and a corresponding supply/input voltage during startup. The output of the LDO linear regulator is responsive to such ratios. Accordingly, the LDO linear regulator can have a different operational response during startup. This can include, for instance, an increased voltage overshoot on the regulated output voltage, when compared to steady state operation. Accordingly, the startup circuit modifies the effective operational parameters of the LDO linear regulator. The startup circuit can then allow the LDO linear regulator to operate according to its designed operational parameters during steady state operation.

In particular embodiments of the present disclosure, an LDO linear regulator is configured to modify operating parameters by overriding internal control signal(s) used to adjust the linear power component (*e*.*g*., power transistor) of the LDO linear regulator. This overriding can reduce or eliminate power from being provided to the output of the LDO linear regulator during startup. In certain instances, the overriding of the internal control signal(s) can be gradually reduced until steady state operation is reached. For instance, the control signal(s) can be overridden by activating one or more transistors. The transistors can be driven strongly during the initial part of a startup time. The drive strength can then be gradually reduced until the transistors are disabled (during steady state operation). Accordingly, the startup circuit can provide a smooth transition between the startup operating parameters and the steady state operating parameters.

Aspects of the present disclosure are directed toward a startup circuit that can be used with a variety of different LDO linear regulator circuits. A non-limiting example of an LDO linear regulator circuit is described hereafter; however, other variations of LDO linear regulator circuits can also be used with the startup circuit. An LDO linear regulator can include three different three stages: an (differential) input/error stage, a buffer (amplifier) stage and an output stage. In certain instances, the buffer stage is optional. The output stage can be configured and arranged to control an output transistor so as to provide a voltage regulated output signal. For instance, the gate of a p-channel (P) metal-oxide-semiconductor (MOS) field-effect transistor (FET) can be driven by the LDO linear regulator circuit in response to an error signal that is based upon the difference between the actual output voltage and a desired output voltage. The error signal can be generated by the input stage that is responsive to a feedback circuit. For instance, the feedback circuit can be responsive to a resistor divider network in series with the output voltage and the PMOS transistor.

The input stage can be configured and arranged to generate an error signal based upon a comparison between a feedback signal (relative to the output voltage) and a reference voltage (Vref). This error signal can then be provided to the buffer stage. The resulting output of the buffer stage determines the strength at which the output stage is driven. In certain embodiments, frequency compensation/filtering can be provided. For instance, an external capacitor (*e*.*g*., in the µF range) can be applied on the output voltage (Vout). In other instances, internal frequency compensation can be provided. For instance, filter circuit(s) can be added to the input and/or buffer stages.

The reference voltage (Vref) can be generated internal to the IC chip of the LDO linear regulator circuit. In some instances, the reference voltage can be generated by a circuit that is substantially temperature independent (*e*.*g*., a bandgap voltage reference circuit or similar circuit). During startup of the LDO linear regulator circuit, the input voltage (Vin) ramps up to its steady state value. Bandgap voltage sources and other circuits can be subject to internal delays. Accordingly the reference voltage (Vref) can have a small internal delay relative to the increasing input voltage (Vin). Somewhat surprisingly, even with such a delay, Vref can reach its steady state value before the Vin does the same. Thus, the LDO linear regulator circuit is subject to different operating parameters during startup than during steady state operation. A particular consequence is that the LDO linear regulator circuit can overshoot the desired Vout voltage value by a significant amount during startup.

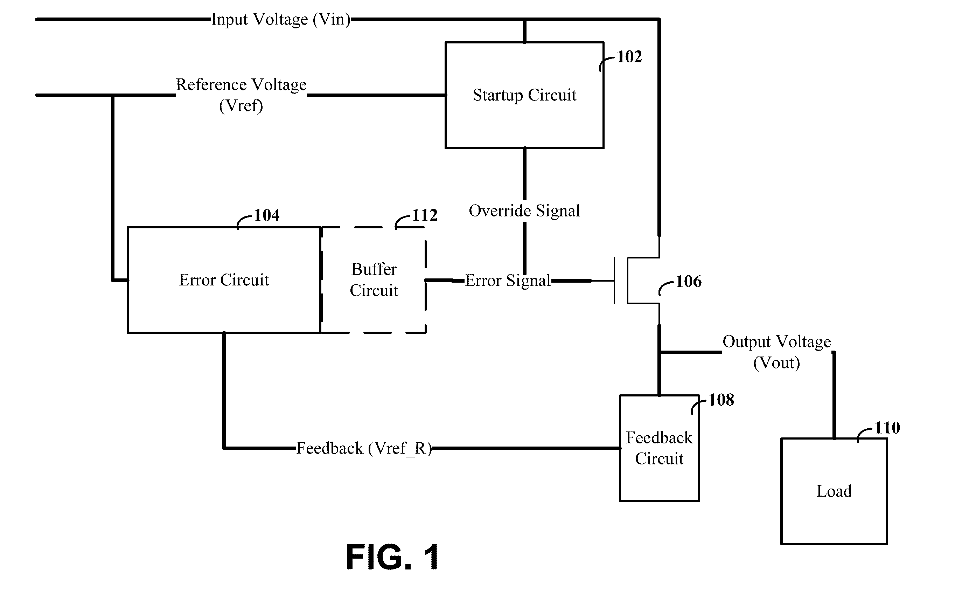

Turning now to the figures, FIG. 1 depicts a block diagram for an LDO linear regulator circuit, consistent with embodiments of the present disclosure. The LDO linear regulator circuit receives an input voltage (Vin) and uses Vin to produce a regulated output voltage (Vout). Vout can then be provided to power another circuit (load 110). Vout is monitored/measured by feedback circuit 108. Feedback circuit 108 generates a feedback signal (Vref_R) that can be used to regulate Vout. In a non-limiting example, Vref_R can be generated from a resistor divider network.

Error circuit 104 is configured and arranged to generate an error signal that is responsive to a comparison between Vref_R and a reference voltage (Vref). The reference voltage is set according to a desired value for Vout. For instance, if the feedback circuit is configured and arranged to generate Vref_R = Vout/2, then Vref can be set to one half of the desired output voltage. When the difference between Vref_R and Vref is low, error circuit 104 can generate an analog error signal that is proportional to this difference. In this manner, the effective resistance of output transistor 106 can be adjusted (*e*.*g*., by controlling the source-gate voltage (Vsg)). Optionally a buffer/amplifier circuit 112 can be used to buffer and/or amplify the error signal before it is provided to the output transistor 106. For instance, the buffer/amplifier circuit 112 can provide amplification that sets the operating parameters of the LDO linear regulator circuit. These operating parameters can be set to provide, among other considerations, adequate transient response, dampen oscillations and/or limit overshoot.

During startup conditions, where Vin is ramping up to a steady state value, the operating parameters of the LDO linear regulator circuit can be significantly different than during steady state. Accordingly, overshoot during startup can be significantly more than during steady state. The startup circuit 102 is configured and arranged to adjust the effective operating parameters of the LDO linear regulator circuit during startup. This can be particularly useful for compensating for effects such as undesirable overshoot. In a particular instance, the startup circuit 102 provides an override signal that overrides the error signal provided to the output transistor 106. For instance, the override signal can disable the output transistor 106 when power is first provided.

In certain embodiments of the present disclosure, startup circuit 102 can override the error signal be shifting the value (*e*.*g*., voltage) of the error signal. The amount of this signal can vary during a startup time. The startup time can be determined from the relevant signal values, which can include Vref and/or Vin. For instance, startup circuit 102 can include a timing circuit that is responsive to Vref and/or Vin. The shift provided by the override signal can be lessened during the startup time (responsive to the timing circuit) and ultimately set to a nominal value once the startup time has completed (and the LDO linear regulator circuit is at steady state operation).

A particular embodiment of the present disclosure uses an override transistor that drives the error signal to an inactive level during startup. The startup circuit (responsive to the timing circuit) can lessen the drive of the override transistor as the LDO linear regulator circuit approaches and reaches steady state. This can be particularly useful for adjusting effective operating parameters of the LDO linear regulator circuit during startup, while gradually reducing the adjustment amount until the operating parameters are at steady state levels. In certain embodiments, the timing circuit can include a capacitive circuit that charges as a function of both Vref and Vin.

According to an embodiment, a voltage regulator device that generates a regulated output voltage (Vout) from an input voltage (Vin) and in response to a reference voltage (Vref). Vref has, during a startup period, a delayed ramp up relative to a corresponding ramp up of the input voltage. The voltage regulator device includes an error circuit 104 that is configured and arranged to generate an error signal in response to a comparison between Vout and Vref. An output circuit includes a power transistor (*e*.*g*., output transistor 106) that is activated in response to the error signal. A startup circuit 102 is configured and arranged to override, during the startup period for the voltage regulator device, the error signal and thereby counteract activation of the power transistor.

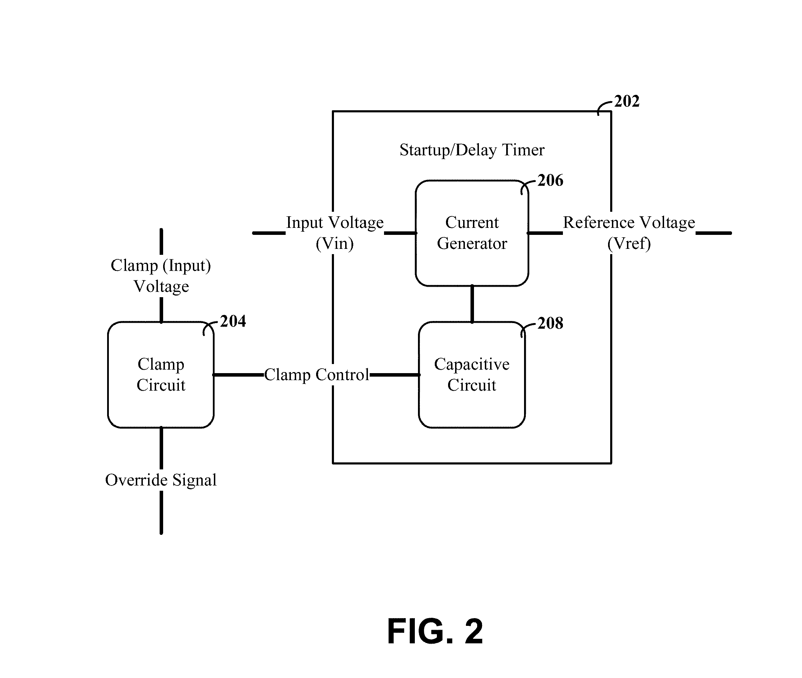

FIG. 2 depicts a block diagram for components of a startup circuit, consistent with embodiments of the present disclosure. Startup delay/timer circuit 202 generates and provides a clamp control signal to claim circuit 204. In response to the clamp control signal, clamp circuit 204 generates an override signal by clamping the override signal to an input voltage (*e*.*g*., Vin). The strength of the clamping effect (*e*.*g*., amount of power or current of the override signal) can be adjusted as a function of the clamp control signal. Thus, the clamping effect can be less than a perfect clamp.

Consistent with embodiments of the present disclosure, the startup timer 204 can be configured and arranged to generate the clamp control signal by charging a capacitive circuit 208. The charging of the capacitive circuit can be responsive to the reference voltage (Vref) and to the input voltage (Vin). This can be accomplished using a current generation circuit 206 that provides a current that is a function of these two voltages.

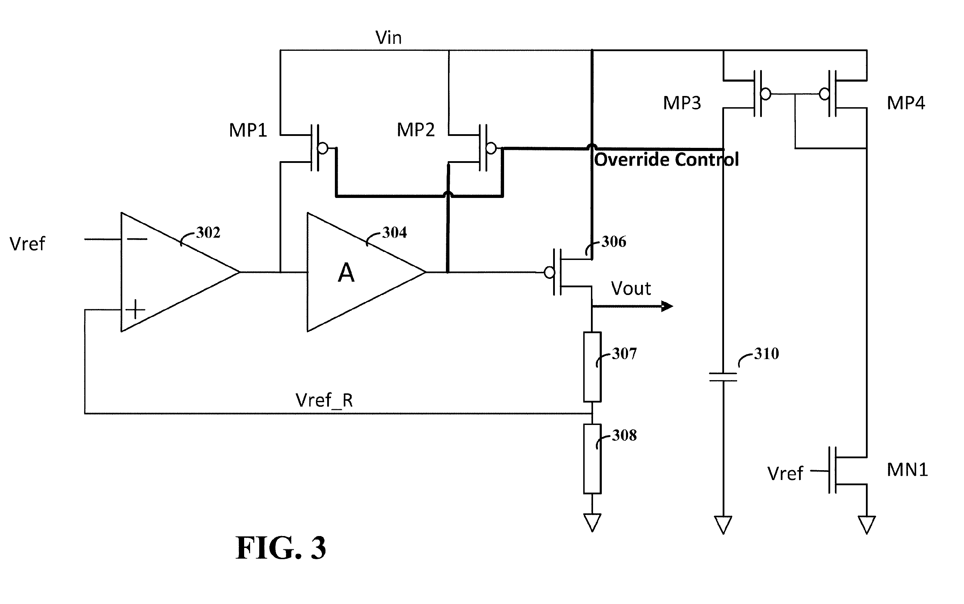

FIG. 3 shows a circuit diagram for an LDO linear regulator circuit, consistent with embodiments of the present disclosure. The circuit of FIG. 3 adjusts the initial operating points and parameters for the LDO linear regulator by initially disabling the power output transistor 306. This is accomplished by overriding the error signal provided by comparator 302 and amplifier 304. In particular, transistors MP1 and MP2 clamp the error signal to the value of Vin and thereby maintain a low source gate voltage (Vsg) of the power output transistor 306. This can be particularly useful for reducing or preventing the overshoot of the output voltage Vout during ramp up of Vin.

The circuit is designed to charge capacitor 310 using a current mirror formed by transistors MP3 and MP4, with transistor MN1 enabling the current mirror. Transistor MN1 is controlled by Vref. Accordingly, the charging of capacitor 310 is delayed until after Vref has reached a voltage sufficient to enable transistor MN1. In this manner, the timing delay provided by the charging of capacitor 310 is responsive to Vref and will not begin until Vref has begun to ramp up.

The time constant required to charging of capacitor 310 can be defined in terms of the current provided by the current mirror and the value of capacitor 310. Accordingly, embodiments of the present disclosure are directed toward a circuit in which the time constant is set to be less than a time constant for the ramp up of the Vref_R voltage/node, which is generated from Vout using a resistor divider network 307, 308. This helps to counteract overdriving of Vout caused by the operating parameters during startup. The clamping of the regulator output can then be gradually released according to the time constant determined by the charging of capacitor 310. The clamping can be particularly useful for counteracting the initial charge state of the circuit (*e*.*g*., zero charge) as well as the passive draw of the resistor divider network.

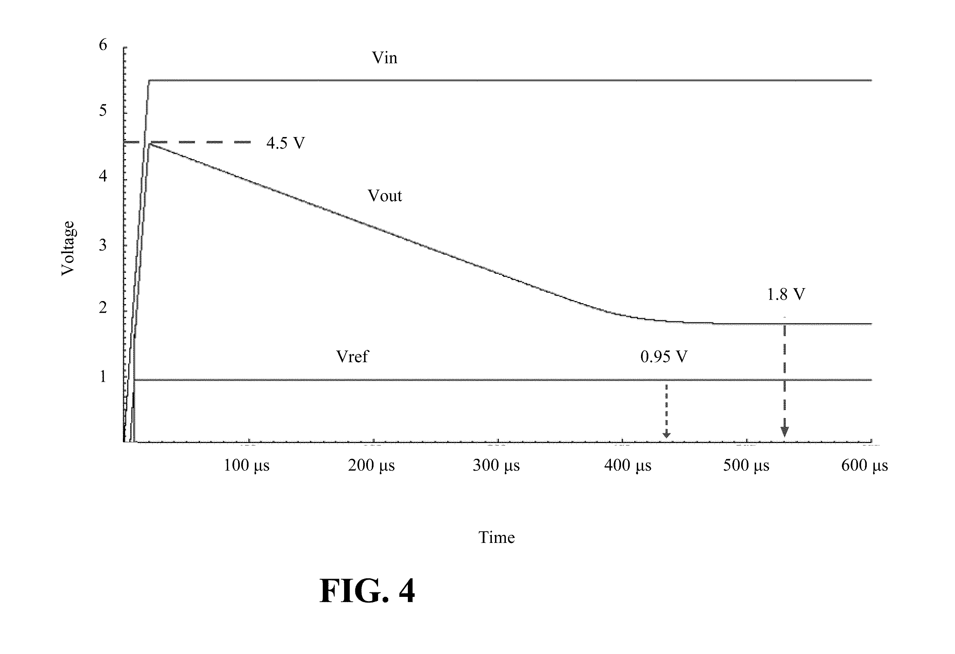

FIG. 4 depicts a graph of voltage per unit time with respect to the settling time of an LDO linear regulator circuit, consistent with embodiments of the present disclosure. The graph represents an LDO linear regulator circuit made from 0.18 µm CMOS technology, a 1.8 V output target and with a 5.5 V input. 1.8 V is used in the example to represents a supply voltage that can be provided for digital or analog circuits. FIG. 4 shows a fast ramp up of Vout from 0 V to 5.5 V in about 20 µs. The ramp up of Vref is slightly delayed (5µs). Vref is set in this example to 0.95 V and reaches this value in less than the 20 µs required for Vout to reach 5.5 V. Vout does not settle to its steady state voltage (1.8 V) until about 500 µs, which is determined by the internal bandwidth of the LDO linear regulator circuit. The settling, however, does not begin until after Vout has been overdriven to about 4.5 V. Relative to the desired voltage of 1.8 V, 4.5 V is a significant overshoot and represents a significant danger of damaging the respectively-powered digital or analog circuits.

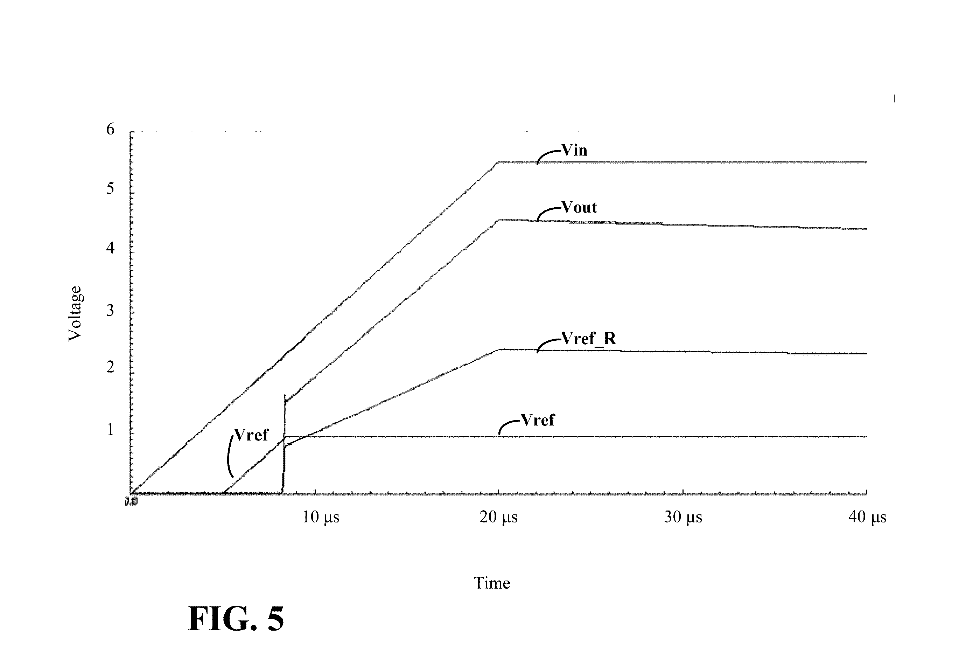

FIG. 5 depicts a graph of voltage per unit time with respect to the startup time of an LDO linear regulator circuit, consistent with embodiments of the present disclosure. The ramp up of Vref is delayed (relative that ramp up of Vout) by about 5 µs. As steady state value for Vref is only about 0.95 V, Vref reaches this steady state value only a few µs later. As shown in FIG. 5, the differential input stage is strongly overdriven at this point because the feedback voltage Vref_R is still zero. This results in a large error signal being generated by output of the differential stage, which in the example of FIG. 3 is driven low. Moreover, the initial state of the differential input stage output is low, since all the nodes are have zero charge in the beginning of the ramp up of the power.

Consistent with FIG. 3, the output of the differential input stage drives the buffer/amplifier stage and the buffer output is connected to the gate of a PMOS gate. Because the output of the input of the differential input stage is driven low, the gate of the PMOS pass transistor is also driven low. This causes the PMOS gate to be overdriven by about 66 mV (Vsg). Assuming, for example, that the PMOS gate is a relative large transistor (*e*.*g*., W=2560 µm, L=1 µm) even a small overdrive of Vsg creates a significant amount of current at the drain of the transistor (and also in the current through the resistor divider network). The resistor divider voltage, Vref_R, ends up being overdriven by about 2.4 V. The corresponding Vout voltage is about 4.5 V = (R1+R2)/R2 x Vref_R. After the initial peak on Vout and Vref_R, the LDO linear regulator beings to regulate the voltage difference of the input stage Vref - Vref_R to zero.

Accordingly, the overriding/clamping strength of transistors MP1 and MP2 can be set to be sufficient to counteract the overdriving of the PMOS gate (*e*.*g*., counteracting the 66 mV of the example embodiment discussed in connection with FIG. 5).

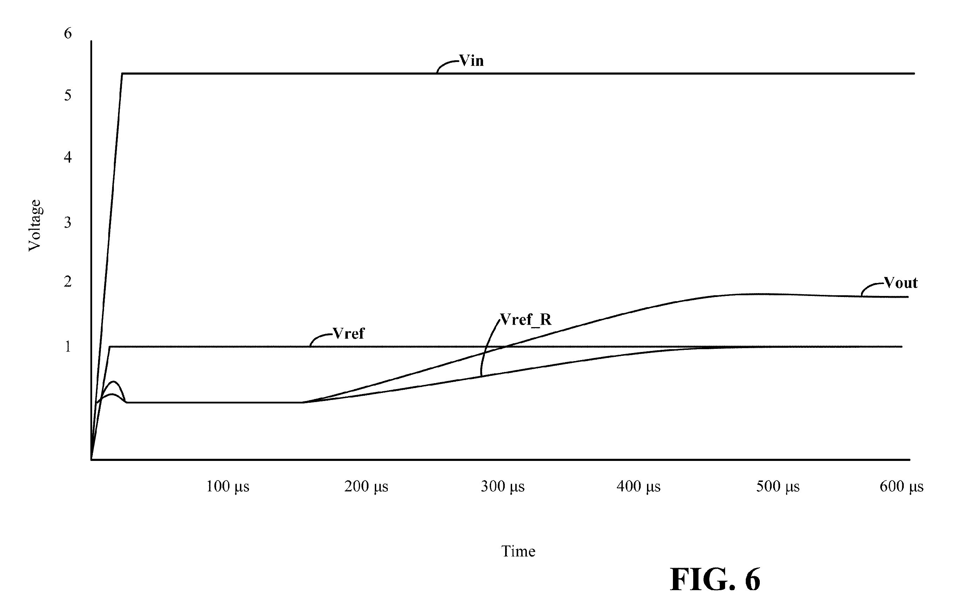

FIG. 6 depicts a graph of voltage per unit time with an LDO linear regulator circuit that includes a startup circuit, consistent with embodiments of the present disclosure. As shown in FIG. 6, by overriding/clamping the error signal generated by the input stage, the output transistor is not overdriven in initial stages of startup and the output voltage (Vout) and feedback reference voltage (Vref_R) do not overshoot their steady state values.

The particular example and experimental embodiments discussed in connection with FIGs. 4-6 are not limiting. For instance, different values for the components can result in different timing delays and different overdrive conditions. Moreover, LDO linear regulator circuits can be modified in terms of their operation including, but not limited to, different feedback circuits, comparator circuits and/or output drive circuits.

Various modules may be implemented to carry out one or more of the operations and activities described herein and/or shown in the figures. In these contexts, a "module" is a circuit that carries out one or more of these or related operations/activities. For example, in certain of the above-discussed embodiments, one or more modules are discrete logic circuits or programmable logic circuits configured and arranged for implementing these operations/activities, as in the circuit modules shown in the Figures. In certain embodiments, the descrete circuit components can be arranged to carry out the functions.

Certain embodiments are directed to a computer program product (*e*.*g*., nonvolatile memory device), which includes a machine or computer-readable medium having stored thereon instructions which may be executed by a computer (or other electronic device) to perform these operations/activities.

Based upon the above discussion and illustrations, those skilled in the art will readily recognize that various modifications and changes may be made to the present disclosure without strictly following the exemplary embodiments and applications illustrated and described herein. For example, the particular circuit components can be modified to include reasonable variations providing similar functions such as inverting logic to use active high signaling in place of active low and *vice versa.* Such modifications do not depart from the true spirit and scope of the present disclosure, including that set forth in the following claims.

## Claims

1. A voltage regulator device that generates a regulated output voltage from an input voltage and in response to a reference voltage that has, during a startup period, a delayed ramp up relative to a corresponding ramp up of the input voltage, the device comprising:
an error circuit configured and arranged to generate an error signal in response to a comparison between the output voltage and the reference voltage;
an output circuit that includes a power transistor that is activated in response to the error signal; and
a startup control circuit configured and arranged to override, during the startup period for the voltage regulator device, the error signal and thereby counteract activation of the power transistor.

2. The device of claim 1, wherein the startup circuit includes a delay circuit that determines how long the error signal is overridden by the startup control circuit, wherein the startup period provides time for the voltage regulator to achieve steady state.

3. The device of claim 1 or 2, wherein the startup control circuit includes a delay circuit that determines a length of time that the error signal is overridden.

4. A device as claimed in any preceding claim, wherein the startup control circuit includes a clamp circuit configured to override the error signal by clamping the error signal to a set voltage.

5. The device of claim 4, wherein the startup control circuit is configured and arranged to gradually decrease the clamping of the error signal.

6. The device of claim 4 or 5, wherein the clamp circuit includes at least on transistor configured and arranged to override the error signal by clamping the error signal to the input voltage.

7. A device as claimed in any preceding claims, wherein the startup control circuit includes a current generation circuit that generates a current that is responsive to the reference voltage and a capacitive circuit configured to be charged by the current generation circuit; and wherein the startup circuit is further configured and arranged to override the error signal until the capacitive circuit is charged above a threshold value.

8. The device of claim 7, wherein the current generation circuit is a current mirror responsive to a current source that is controlled by the reference voltage.

9. A device as claimed in any preceding claim, wherein the voltage regulator device is a low drop out linear regulator.

10. A method of operating a voltage regulator device that generates, at an output node, a regulated output voltage from an input voltage and in response to a reference voltage that has, during a startup period, a delayed ramp up relative to a corresponding ramp up of the input voltage, the method comprising:
comparing, using a comparison circuit, the output voltage and the reference voltage;
generating, using an error circuit, an error signal in response to the comparison;
providing the error signal to a gate of a power transistor that provides power to the output node when activated;
overriding, using a startup control circuit, the error signal and thereby counteracting activation of the power transistor; and
halting the overriding in response to a timing circuit that begins timing during the startup period for the voltage regulator device.

11. The method of claim 10, wherein the step of overriding includes activating a clamp circuit that drives the error signal towards a voltage level that deactivates the power transistor.

12. The method of claim 11, wherein the step of overriding includes gradually decreasing a strength at which the error signal is driven towards the voltage level that deactivates the power transistor.

13. The method of claim 10, further including a step of activating the timing circuit in response to the reference voltage ramping up during the startup period.

14. The method of claim 13, wherein activating the timing circuit includes activating a current mirror that is configured and arranged to charge a capacitive circuit.

15. The method of claim 13, wherein activating the timing circuit includes activating a current mirror configured to charge a capacitive circuit and wherein the capacitive circuit is connected to gates for one or more transistors configured to clamp the error signal.
